# EUROPEAN PATENT APPLICATION

(11) **EP 1 672 298 A2**
(43) Date of publication of application: **21.06.2006**
(21) Application number: 05013046.7
(22) Date of filing: 16.06.2005
(51) Int. Cl.: F25B 31/00, F25B 13/00

(54) **Air conditioner**

(30) Priority: 15.12.2004 KR 2004106350
(71) Applicant: LG ELECTRONICS INC., Seoul 150-010 (KR)
(72) Inventor: Hwang, Yoon Jei, Seoul 140-031 (KR); Song, Chan Ho No. 120-302 Dongbu Apt. Dalvit vill., Koyang-si Kyungki-do 412-735 (KR); Park, Jeong Taek, Anan-si Kyungki-do 426-060 (KR); Jang, Ji Young, Sungnam-si Kyungki-do 462-170 (KR)
(74) Representative: TER MEER - STEINMEISTER & PARTNER GbR

(57) **Abstract**

Disclosed herein is an air conditioner having a single oil separator (73) mounted on a confluent discharging channel (70), to which are connected discharging channels (68, 69) provided at compressors (52, 53), and an electronic expansion valve (75), of which the opening level is controllable, mounted on an oil collection pipe (74) connected to the oil separator (73). As a result, the number of the oil separators is decreased. Consequently, the present invention has the effect of simplifying the structure of the air conditioner and reducing the manufacturing costs of the air conditioner. Furthermore, refrigerant is bypassed by controlling the opening level of the electronic expansion valve to control the flow rate of the refrigerant. Consequently, the present invention has the effect of eliminating an additional bypassing device, and therefore, simplifying the structure of the air conditioner and the controlling method of the air conditioner.

## Description

### BACKGROUND OF THE INVENTION

### Field of the Invention

The present invention relates to an air conditioner, and, more particularly, to an air conditioner having a single oil separator assigned to a plurality of compressors and an electronic expansion valve mounted on an oil collection pipe connected to the oil separator such that opening level of the electronic expansion valve is controlled, whereby the structure of the air conditioner is simplified, and therefore, the manufacturing costs of the air conditioner are reduced, and the air conditioner is easily controlled.

### Description of the Related Art

Generally, an air conditioner is an apparatus that cools and heats the interior of a room where the air conditioner is installed so as to make the indoor environment more pleasant. The air conditioner suctions indoor air, heats or cools the suctioned air, and then discharges heated or cooled air into the interior of the room.

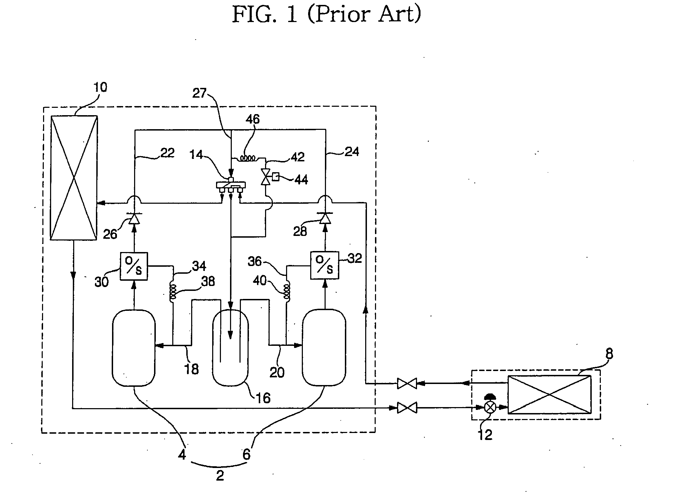

FIG. 1 is a circuit diagram schematically showing the construction of a conventional air conditioner.

As shown in FIG. 1, the conventional air conditioner comprises: a compressor 2 for compressing low-temperature and low-pressure gas refrigerant gas into high-temperature and high-pressure gas refrigerant; a condenser for condensing the refrigerant discharged from the compressor 2 (an indoor heat exchanger 8 in heating operation mode and an outdoor heat exchanger 10 in cooling operation mode); an expansion mechanism 12 for expanding the refrigerant condensed by the condenser, i.e., liquid refrigerant; an evaporator for evaporating the refrigerant introduced from the expansion mechanism 12 (the outdoor heat exchanger 10 in the heating operation mode and the indoor heat exchanger 8 in the cooling operation mode); and a four-way valve 14 for guiding flow of the refrigerant according to selected operation mode, i.e., the heating operation mode or the cooling operation mode.

The compressor 2 comprises first and second compressors 4 and 6. The first compressor 4 is an inverter-type compressor, and the second compressor 6 is a constant-speed type compressor. The first and second compressors 4 and 6 are connected to each other via a common accumulator 16.

Specifically, the common accumulator 16 is connected to first and second introducing channels 18 and 20 provided at the first and second compressors 4 and 6, respectively.

To the first and second compressors 4 and 6 are connected first and second discharging channels 22 and 24 for discharging compressed high-temperature and high-pressure gas refrigerant, respectively. On the first and second discharging channels 22 and 24 are mounted first and second check valves 26 and 28 for preventing back-flow of the high-temperature and high-pressure gas refrigerant, respectively.

On the first and second discharging channels 22 and 24 are also mounted first and second oil separators 30 and 32 for separating oil from the refrigerant discharged from the first and second compressors 4 and 6, respectively. To the first and second oil separators 30 and 32 are connected first and second oil collection pipes 34 and 36 for guiding the oil separated by the first and second oil separators 30 and 32 to the first and second introducing channels 18 and 20 of the first and second compressors 4 and 6, respectively.

On the first and second oil collection pipes 34 and 36 are mounted first and second capillary tubes 38 and 40 for decompressing the collected oil and preventing collection of the refrigerant, respectively.

The first and second discharging channels 22 and 24 are connected to a third discharging channel 27 for guiding the discharged refrigerant to the four-way valve 14. To the third discharging channel 27 is connected a bypass channel 42 for bypassing the discharged refrigerant to the common accumulator 16 when load to be cooled is less than the capacity of the compressor being operated. On the bypass channel 42 are mounted an opening/closing valve 44 for opening or closing the bypass channel 42 and a third capillary tube 46 for decompressing the discharged refrigerant.

The operation of the conventional air conditioner with the above-stated construction will be described below.

When the first and second compressors 4 and 6 are simultaneously operated, refrigerant discharged from the first and second compressors 4 and 6 flows through the first and second discharging channels 22 and 24, and is then introduced into the first and second oil separators 30 and 32, where oil is separated from the refrigerant.

The refrigerant, from which the oil has been separated by the first and second oil separators 30 and 32, flows through the first and second discharging channel 22 and 24 and the third discharging channel 27. Subsequently, the refrigerant flows through the four-way valve 14, the outdoor heat exchanger 10, the expansion mechanism 12, the indoor heat exchanger 8, and the four-way valve 14. Finally, the refrigerant is introduced into the common accumulator 16.

The oil separated from the refrigerant by the first and second oil separators 30 and 32 flows through the first and second oil collection pipes 34 and 36 and the first and second capillary tubes 38 and 40. As the oil flows through first and second capillary tubes 38 and 40, the oil is decompressed. Finally, the decompressed oil is introduced into the first and second compressors 4 and 6 through the first and second introducing channels 18 and 20, respectively. In this way, oil is collected.

If the bypass channel 42 is opened by the opening/closing valve 44 in order to reduce the flow rate of the refrigerant when load is less than the capacities of the first and second compressors 4 and 6 being operated, some of the refrigerant passing through the third discharging channel is guided into the third capillary tube 46 through the bypass channel 42. As the refrigerant flows through the third capillary tube 46, the refrigerant is decompressed. The decompressed refrigerant is introduced into the common accumulator 16.

In the conventional air conditioner, however, it is required that the oil separators be assigned to the respective compressors. In addition to the first and second oil separators 30 and 32, the bypass channel 42, the opening/closing valve 44, and the third capillary tube 46 are necessary. As a result, the structure of the conventional air conditioner is complicated, and therefore, the manufacturing costs of the air conditioner are increased. Furthermore, it is necessary to individually control the first and second oil separators 30 and 32, the bypass channel 42, and the opening/closing valve 44, and therefore, methods of controlling conventional air conditioners are very complicated.

### SUMMARY OF THE INVENTION

Therefore, the present invention has been made in view of the above problems, and it is an object of the present invention to provide an air conditioner having a single oil separator assigned to a plurality of compressors and an electronic expansion valve mounted on an oil collection pipe connected to the oil separator such that opening level of the electronic expansion valve is controlled, whereby the air conditioner performs an oil collecting function and a refrigerant bypassing function with a simplified structure of the air conditioner, the manufacturing costs of the air conditioner are reduced, and the air conditioner is easily controlled.

In accordance with the present invention, the above and other objects can be accomplished by the provision of an air conditioner comprising: a plurality of compressors for compressing refrigerant; a condenser for condensing the refrigerant discharged from the compressors; an expansion mechanism for expanding the refrigerant discharged from the condenser; and an evaporator for evaporating the refrigerant passing through the expansion mechanism, wherein the air conditioner further comprises: an oil separator mounted on a confluent discharging channel, which is connected to discharging channels provided at the respective compressors for guiding the refrigerant discharged through the discharging channels to the condenser, for separating oil from the refrigerant; and an oil collection pipe for guiding the oil separated by the oil separator to the inlets of the respective compressors.

Preferably, the air conditioner further comprises: a valve device mounted on the oil collection pipe for opening/closing the oil collection pipe.

Preferably, the valve device is an electronic expansion valve.

Preferably, the air conditioner further comprises: check valves mounted on the respective discharging channels for preventing back-flow of the compressed refrigerant.

Preferably, the air conditioner further comprises: a common accumulator connected to introducing channels provided at the respective compressors.

Preferably, the oil collection pipe is connected to the inlet of the common accumulator.

Preferably, the air conditioner further comprises: a controller for controlling the opening level of the electronic expansion valve.

Preferably, the controller controls the opening level of the electronic expansion valve according to load of the compressors.

Preferably, the controller decreases the opening level of the electronic expansion valve to below a predetermined value when the load of the compressors is adequate, and increases the opening level of the electronic expansion valve to above the predetermined value when the load of the compressors is small.

Preferably, the air conditioner further comprises: a four-way valve mounted on the confluent discharging channel for guiding flow of the refrigerant according to heating operation mode or cooling operation mode.

According to the present invention, the single oil separator is mounted on the confluent discharging channel, to which are connected the discharging channels provided at the respective compressors, and the electronic expansion valve, of which the opening level is controllable, is mounted on the oil collection pipe connected to the oil separator. As a result, the number of the oil separators is decreased. Consequently, the present invention has the effect of simplifying the structure of the air conditioner and reducing the manufacturing costs of the air conditioner. Furthermore, refrigerant is bypassed by controlling the opening level of the electronic expansion valve to control the flow rate of the refrigerant. Consequently, the present invention has the effect of eliminating an additional bypassing device, and therefore, simplifying the structure of the air conditioner and the controlling method of the air conditioner.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a circuit diagram schematically showing a conventional air conditioner;
FIG. 2 is a circuit diagram schematically showing an air conditioner according to the present invention operated in cooling operation mode; and
FIG. 3 is a circuit diagram schematically showing the air conditioner according to the present invention operated in heating operation mode.

### DESCRIPTION OF THE PREFERRED EMBODIMENTS

Now, a preferred embodiment of the present invention will be described in detail with reference to the accompanying drawings.

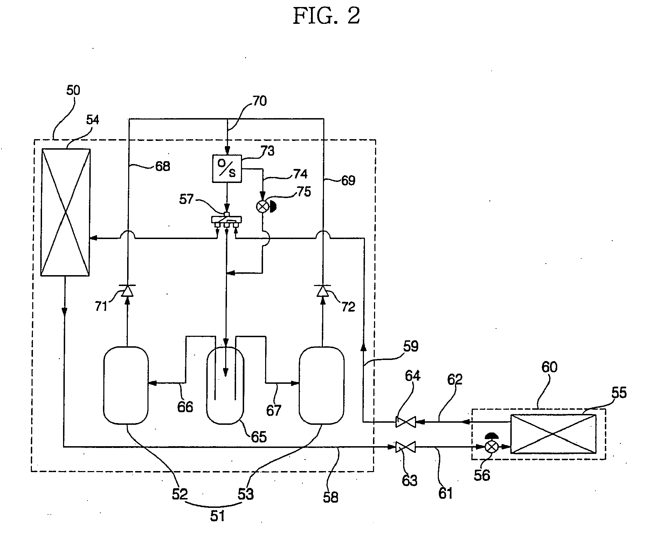

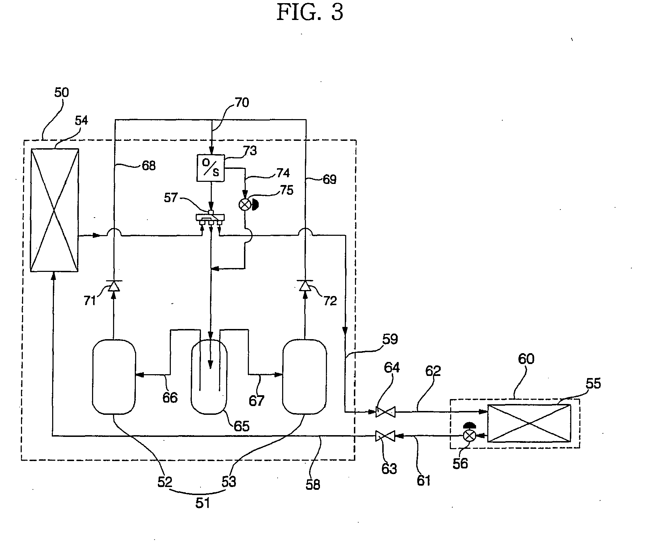

FIG. 2 is a circuit diagram schematically showing an air conditioner according to the present invention operated in cooling operation mode, and FIG. 3 is a circuit diagram schematically showing the air conditioner according to the present invention operated in heating operation mode.

As shown in FIG. 2, the air conditioner according to the present invention is a heat-pump type air conditioner. The air conditioner comprises: a compressor 51 for compressing refrigerant; a condenser for condensing the refrigerant discharged from the compressor 51, i.e., high-temperature and high-pressure gas refrigerant (an indoor heat exchanger 55 in heating operation mode and an outdoor heat exchanger 54 in cooling operation mode); an expansion mechanism 56 for expanding the refrigerant discharged from the condenser into low-temperature and low-pressure two-phase refrigerant; an evaporator for evaporating the refrigerant passing through the expansion mechanism 56 into gas refrigerant (the outdoor heat exchanger 54 in the heating operation mode and the indoor heat exchanger 55 in the cooling operation mode); and a four-way valve 57 for guiding flow of the refrigerant according to selected operation mode, i.e., the heating operation mode or the cooling operation mode.

The compressor 51 and the outdoor heat exchanger 54 are mounted in an outdoor unit 50, and the indoor heat exchanger 55 and the expansion mechanism 56 are mounted in an indoor unit 60.

The outdoor unit 50 comprises: an outdoor unit refrigerant discharging channel 58 for guiding refrigerant discharged from the outdoor heat exchanger 54 to the indoor unit 60; and an outdoor unit refrigerant introducing channel 59 for guiding refrigerant discharged from the indoor unit 60 to the outdoor unit 50.

The indoor unit 60 comprises: an indoor unit refrigerant introducing channel 61 for introducing refrigerant from the outdoor unit 50; and an indoor unit refrigerant discharging channel 62 for discharging refrigerant from the indoor unit 60 to the outdoor unit 50.

The outdoor unit refrigerant discharging channel 58 and the indoor unit refrigerant introducing channel 61 are connected to each other via a first service valve 63, and the outdoor unit refrigerant introducing channel 59 and the indoor unit refrigerant discharging channel 62 are connected to each other via a second service valve 64.

The compressor 51 comprises first and second compressors 52 and 53. Preferably, the first compressor 52 is an inverter-type compressor, and the second compressor 53 is a constant-speed type compressor. The first and second compressors 52 and 53 are connected to each other via a common accumulator 65. To one side of the common accumulator 65 are connected first and second introducing channels 66 and 67, which are provided at the first and second compressors 52 and 53, respectively. The outdoor unit refrigerant introducing channel 59 is connected to the other side of the common accumulator 65 for guiding refrigerant discharged from the indoor heat exchanger 55 to the common accumulator 65.

To the first and second compressors 52 and 53 are connected first and second discharging channels 68 and 69 for discharging compressed high-temperature and high-pressure gas refrigerant, respectively. The first and second discharging channels 68 and 69 are connected to a confluent discharging channel 70 for guiding refrigerant discharged from the first and second compressors 52 and 53 to the outdoor heat exchanger 54.

On the first and second discharging channels 68 and 69 are mounted first and second check valves 71 and 72 for preventing back-flow of the high-temperature and high-pressure gas refrigerant toward the first and second compressors 52 and 53, respectively.

On the confluent discharging channel 70 is mounted an oil separator 73 for separating oil from the refrigerant discharged from the first and second compressors 52 and 53, respectively.

To one side of the oil separator 73 is connected an oil collection pipe 74 for guiding the oil separated by the oil separator 73 to the inlets of the first and second compressors 52 and 53. The oil collection pipe 74 is connected to the outdoor unit refrigerant introducing channel 59.

On the oil collection pipe 74 is mounted a valve device for opening/closing the oil collection pipe 74. Preferably, the valve device is an electronic expansion valve 75 whose opening level is controllable.

The air conditioner according to the present invention further comprises: a controller (not shown) for controlling opening level of the electronic expansion valve 75 to increase the opening level of the electronic expansion valve 75, when load is less than the capacities of the first and second compressors 52 and 53 being operated, and thus, it is necessary to bypass some of the refrigerant discharged from the first and second compressors 52 and 53, such that some of the refrigerant introduced from the oil separator 73 to the oil collection pipe 74 is bypassed through the oil collection pipe 74, and to decrease the opening level of the electronic expansion valve 75, when the load is adequate, such that only the oil passes through the oil collection pipe 74.

The operation of the air conditioner with the above-stated construction according to the present invention will be described below in detail.

When the air conditioner is operated in the cooling operation mode, as shown in FIG. 2, the four-way valve 57 is switched to the cooling operation mode, and therefore, refrigerant compressed by the first and second compressors 52 and 53 are introduced into the outdoor heat exchanger 54.

When the first and second compressors 52 and 53 are simultaneously operated, refrigerant compressed by the first and second compressors 52 and 53 is discharged through the first and second discharging channels 68 and 69, and then flows through the confluent discharging channel 70. Subsequently, the refrigerant is introduced into the outdoor heat exchanger 54 through the four-way valve 57.

The outdoor heat exchanger 54 performs heat exchange between the refrigerant introduced into the outdoor heat exchanger 54 and outdoor air. As a result, heat of the refrigerant is transferred to the outdoor air, and therefore, the refrigerant is condensed.

The condensed refrigerant is introduced into the indoor unit 60 through the outdoor unit refrigerant discharging channel 58, and passes through the expansion mechanism 56. As a result, the refrigerant is expanded into low-temperature and low-pressure refrigerant. The expanded refrigerant passes through the indoor heat exchanger 55. As a result, the refrigerant absorbs heat from indoor air, and therefore, the refrigerant is evaporated.

Consequently, the heat of the indoor air is transferred to the refrigerant, whereby the interior of a room where the indoor unit 60 is installed is cooled.

When the air conditioner is operated in the heating operation mode, as shown in FIG. 3, the four-way valve 57 is switched to the heating operation mode, and therefore, refrigerant compressed by the first and second compressors 52 and 53 flows through the indoor heat exchanger 55, the expansion mechanism 56, and the outdoor heat exchanger 54. As the refrigerant passes through the indoor heat exchanger 55, heat of the refrigerant is transferred to indoor air, whereby the interior of the room where the indoor unit 60 is installed is heated.

When gas refrigerant is compressed by the first and second compressors 52 and 53, oil is mixed in the refrigerant. The refrigerant containing oil passes through the oil separator 73 mounted on the confluent discharging channel 70, and the oil is separated from the refrigerant by the oil separator 73.

The oil separated from the refrigerant by the oil separator 73 flows through the electronic expansion valve 75, and is then introduced into the common accumulator 65 through the outdoor unit refrigerant introducing channel 59. In this way, the oil is collected.

The gas refrigerant, from which the oil has been separated by the oil separator 73, is introduced into the outdoor heat exchanger 54. At this time, some of the gas refrigerant is introduced into the oil collection pipe 74 from the oil separator 73.

When load to be cooled is equal to the capacities of the first and second compressors 52 and 53 being operated, the controller (not shown) decreases the opening level of the electronic expansion valve 75 to below a predetermined value such that the gas refrigerant does not pass through the electronic expansion valve 75. As a result, the diameter of the oil collection pipe 74 is minimized.

Consequently, only the oil passes through the electronic expansion valve 75, and is then introduced into the common accumulator 65. In this way, the oil is collected.

When load to be cooled is less than the capacities of the first and second compressors 52 and 53 being operated, on the other hand, the controller (not shown) increases the opening level of the electronic expansion valve 75 to above the predetermined value. As a result, the diameter of the oil collection pipe 74 is increased.

As the opening level of the electronic expansion valve 75 is increased, the refrigerant introduced into the oil collection pipe 74 from the oil separator 73 flows to the common accumulator 65 through the electronic expansion valve 75.

In this way, some of the refrigerant discharged from the first and second compressors 52 and 53 is bypassed to the common accumulator 65 through the oil collection pipe 74, whereby the flow rate of the refrigerant is controlled.

As apparent from the above description, the single oil separator is mounted on the confluent discharging channel, to which are connected the discharging channels provided at the respective compressors. That is, the number of the oil separators is decreased. Consequently, the present invention has the effect of simplifying the structure of the air conditioner and reducing the manufacturing costs of the air conditioner.

Furthermore, the electronic expansion valve, of which the opening level is controllable, is mounted on the oil collection pipe connected to the oil separator. As a result, refrigerant is bypassed by controlling the opening level of the electronic expansion valve to control the flow rate of the refrigerant. Consequently, the present invention has the effect of eliminating an additional bypassing device, and therefore, simplifying the structure of the air conditioner and the controlling method of the air conditioner.

Although the preferred embodiment of the present invention has been disclosed for illustrative purposes, those skilled in the art will appreciate that various modifications, additions and substitutions are possible, without departing from the scope and spirit of the invention as disclosed in the accompanying claims.

## Claims

1. An air conditioner comprising: a plurality of compressors (52, 53) for compressing refrigerant; a condenser (8; 10) for condensing the refrigerant discharged from the compressors (52, 53); an expansion mechanism (56) for expanding the refrigerant discharged from the condenser; and an evaporator (10; 8) for evaporating the refrigerant passing through the expansion mechanism (56), wherein the air conditioner further comprises:
an oil separator (73) mounted on a confluent discharging channel (70), which is connected to discharging channels (68, 69) provided at the respective compressors (52, 53) for guiding the refrigerant discharged through the discharging channels (68, 69) to the condenser (8; 10), for separating oil from the refrigerant; and
an oil collection pipe (74) for guiding the oil separated by the oil separator (73) to the inlets of the respective compressors (52, 53).

2. The air conditioner as set forth in claim 1, further comprising:
a valve device mounted on the oil collection pipe (74) for opening/closing the oil collection pipe (74).

3. The air conditioner as set forth in claim 2, wherein the valve device is an electronic expansion valve (75).

4. The air conditioner as set forth in claim 3, further comprising:
check valves (71, 72) mounted on the respective discharging channels (68, 69) for preventing back-flow of the compressed refrigerant.

5. The air conditioner as set forth in claim 3, further comprising:
a common accumulator (65) connected to introducing channels (66, 67) provided at the respective compressors (52, 53).

6. The air conditioner as set forth in claim 5, wherein the oil collection pipe (74) is connected to the inlet of the common accumulator (65).

7. The air conditioner as set forth in claim 3, further comprising:
a controller for controlling the opening level of the electronic expansion valve (75).

8. The air conditioner as set forth in claim 7, wherein the controller controls the opening level of the electronic expansion valve (75) according to load of the compressors (52, 53).

9. The air conditioner as set forth in claim 8, wherein the controller decreases the opening level of the electronic expansion valve (75) to below a predetermined value when the load of the compressors (52, 53) is adequate, and increases the opening level of the electronic expansion valve (75) to above the predetermined value when the load of the compressors (52, 53) is small.

10. The air conditioner as set forth in claim 4, further comprising:
a four-way valve (57) mounted on the confluent discharging channel (70) for guiding flow of the refrigerant according to heating operation mode or cooling operation mode.
